# EUROPEAN PATENT APPLICATION

(11) **EP 0 993 191 A2**
(43) Date of publication of application: **12.04.2000**
(21) Application number: 99307771.8
(22) Date of filing: 01.10.1999
(51) Int. Cl.: H04N 7/15

(54) **Video conference for a retail system**

(30) Priority: 07.10.1998 US 167898
(71) Applicant: NCR INTERNATIONAL INC., Dayton, Ohio 45479 (US)
(72) Inventor: Morrison, James, Suwanee Georgia 30024 (US); Bradley, Martin John, Duluth Georgia 30097 (US)
(74) Representative: Cleary, Fidelma

(57) **Abstract**

A retail system includes a retail terminal for use by a user. The retail terminal has a scanner for scanning an item for purchase and a first video conferencing device. The retail system also includes a supervisor terminal for use by retail personnel. The supervisor terminal has a second video conferencing device. The first video conferencing device and the second video conferencing device are configured to communicate with one another so as to allow the user located at the retail terminal to participate in a video conference with the retail personnel located at the supervisor terminal. A method of operating a retail system is also disclosed.

## Description

The present invention relates generally to retail systems, and more particularly to an apparatus and method for conducting a video conference between a retail terminal and a supervisor terminal in a retail system.

In the retail industry, the largest expenditures are typically the cost of the goods sold followed closely by the cost of labor expended. With particular regard to the retail grocery or supermarket industry, the impetus to reduce labor costs has focused on reducing or eliminating the amount of time required to handle and/or process the items or goods to be purchased by a customer. To this end, there have been a number of retail checkout terminal concepts developed which attempt to reduce the amount of time required by a checkout clerk to checkout a customer's items for purchase. For example, assisted retail terminals (i.e. checkout terminals which are operated by a checkout clerk) have heretofore been designed which include integrated scanner and product scale assemblies which eliminate the need for the checkout clerk to carry produce or the like to a centralized weighing station in order to obtain the weight of the produce during a checkout procedure.

Moreover, there have been a number of self-service checkout terminal concepts developed which attempt to substantially eliminate the need for the checkout clerk. A self-service checkout terminal is a system which is operated by a customer without the aid of the checkout clerk. In such a system, the customer scans individual items for purchase across a scanner and then places the scanned items into a grocery bag, if desired. The customer then pays for his or her purchases either at the self-service checkout terminal if so equipped, or at a central payment area which is staffed by a store employee. Thus, a self-service checkout terminal permits a customer to select, itemize, and in some cases pay for his or her purchases without the assistance of the retailer's personnel.

However, during operation of a retail checkout terminal it is occasionally necessary for retail personnel, such as a customer service manager, to intervene in the checkout transaction. For example, in the case of an assisted checkout terminal, the checkout clerk may request intervention from the customer service manager if the checkout clerk does not recognize one of the customer's items for purchase such as exotic produce. Moreover, the checkout clerk may need assistance in the case in which a bar code label is missing or damaged thereby preventing the item from being scanned. Yet further, if the customer has a question relating to an item that the checkout clerk cannot answer (e.g. the shelf life or cooking time associated with the item), the clerk may request assistance from the customer service manager.

Such intervention by store personnel is also occasionally necessary in the case of operation of a self-service checkout terminal. For example, since the customer may have little or no training in the operation of the self-service checkout terminal, the customer may occasionally request assistance from store personnel in regard to operation of the terminal. Moreover, if the customer enters restricted items, such as tobacco products or alcoholic beverages, which by law or otherwise require verification of the customer's age, intervention by the customer service manager may be required to verify the age of the customer. Yet further, if the customer attempts to void an item from his or her transaction, intervention from the customer service manager may be required to assist and/or supervise voiding of the item.

Such intervention has a number of drawbacks associated therewith. For example, the retailer must always have a number of employees (e.g. a number of customer service managers) present during operation of the retail checkout terminals in order to intervene into checkout transactions (as needed) thereby increasing costs associated with the retailer's operation. Moreover, the requirement of such intervention may be inconvenient to the retailer's customers. In particular, if a customer has completed entering his or her items for purchase, tendered payment therefor, and is ready to exit the store, the customer may be undesirably inconvenienced if the customer must wait for the customer service manager to approach the self-service checkout terminal prior to exiting the store. Moreover, such a requirement reduces the throughput associated with the retail checkout terminals. In particular, if the customer is otherwise finished with his or her checkout transaction, but must wait for the customer service manager to approach the retail checkout terminals, the customer is undesirably forced to remain at the terminal thereby reducing the number of customers which may checkout their items for purchase via use of the terminal over a given period of time (i.e. reduces throughput though the terminals).

In an attempt to reduce the number of occasions in which retail personnel (e.g. the customer service manager) must actually approach the retail checkout terminal, a number of communication devices have heretofore been designed. For example, retail systems which have heretofore been designed include retail checkout terminals which include a microphone and speaker assembly that facilitates two-way audio communications with retail personnel located at a supervisor terminal which is likewise equipped with a microphone and speaker assembly. Moreover, retail systems which have heretofore been designed include retail checkout terminals which have a closed-circuit surveillance camera positioned to collect or otherwise capture video images of items being entered into the retail checkout terminal and/or the user of the terminal (e.g. the customer in the case of a self-service checkout terminal). Such video images are displayed on a display monitor located at the supervisor terminal. In such a configuration, an item may be placed under the video camera so as to have a video image of the item displayed on the display monitor located at the supervisor terminal. Thereafter, the customer service manager located at the supervisor terminal may instruct the user via the audio microphone and speaker assemblies. However, such retail system designs have a number of drawbacks associated therewith. For example, retail systems which have heretofore been designed do not allow the user (e.g. the customer in the case of a self-service checkout terminal) and retail personnel (e.g. the customer service manager) to participate in a video conference with one another. In particular, retail systems which have heretofore been designed do not allow two-way video and audio communications between the user (e.g. the customer in the case of a self-service checkout terminal) located at the retail checkout terminal and retail personnel (e.g. the customer service manager) located at the supervisor terminal. What is meant herein by the term "video conference" is a two-way video and two-way audio communication between two or more participants at different sites or locations by using a computer network or networks to transmit video and audio data signals.

It is an object of the present invention to provide a retail system which overcomes one or more of the above-mentioned drawbacks.

In accordance with a first aspect of the present invention, there is provided a retail system, characterized by:
a retail terminal for use by a user, said retail terminal having (i) a scanner for scanning an item for purchase, and (ii) a first video conferencing device; and
a supervisor terminal for use by retail personnel, said supervisor terminal having a second video conferencing device,
wherein said first video conferencing device and said second video conferencing device are configured to communicate with one another so as to allow said user located at said retail terminal to participate in a video conference
with said retail personnel located at said supervisor terminal.

From a second aspect, the present invention resides in a method of operating a retail system which includes (i) a retail terminal for use by a user, said retail terminal having (a) a scanner for scanning an item for purchase, and (b) a first video conferencing device, and (ii) a supervisor terminal for use by retail personnel, said supervisor terminal having a second video conferencing device, characterized by the steps of:
capturing first video images with said second video conferencing device;
generating a first video stream corresponding with said first video images;
transmitting said first video stream with said second video conferencing device;
receiving said first video stream with said first video conferencing device;
extracting second video images from said first video stream, said second video images being representative of said first video images;
displaying said second video images with said first video conferencing device;
generating an item-entered control signal when said user scans said item for purchase with said scanner; and
displaying an item-entered message with said first video conference device in response to generation of said item-entered control signal.

From a third aspect, the present invention resides in a retail terminal for use by a user, comprising:
a scanner for scanning an item for purchase; and
a first video conferencing device, wherein said first video conferencing device is configured so as to allow said user located at said retail terminal to participate in a video conference with an operator of a second video conferencing device.

The retail system of the present invention reduces the number of occasions in which an employee of the retailer must approach a retail checkout terminal in order to intervene in a checkout transaction relative to retail systems which have heretofore been designed. In addition store personnel can assist a user of a retail terminal from a supervisor terminal located at a remote location.

An embodiment of the present invention will now be described with reference to accompanying drawings in which:
FIG. 1 is a simplified block diagram of a retail system which incorporates the features of the present invention therein;
FIG. 2 is a perspective view of a self-service checkout terminal of the retail system of FIG. 1; and
FIG. 3 is a perspective view of a supervisor terminal of the retail system of FIG. 1.

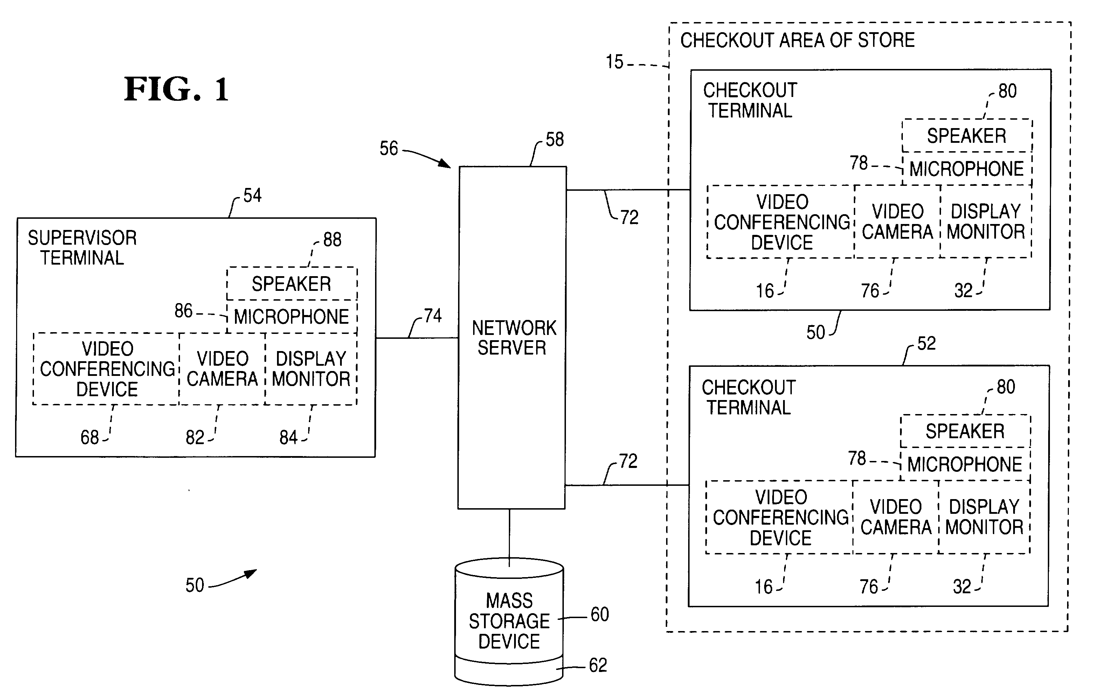

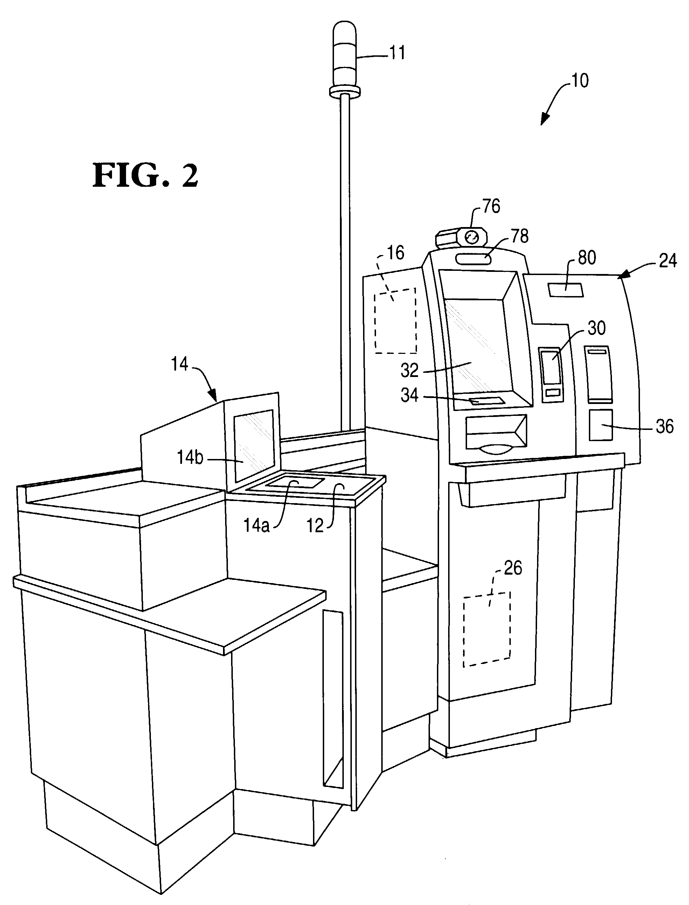

Referring now to FIG. 1, there is shown a retail system 50 for use in a retail operation such as a grocery store. The retail system 50 includes a number of retail checkout terminals 52 and a supervisor terminal 54. The retail terminals 52 are preferably embodied as electronic terminals utilized in a retail operation. For example, the retail terminals 52 may be embodied as a number of self-service checkout terminals 10, as shown in FIG. 2, located within a checkout area 15 of the retailer's store. Moreover, the retail checkout terminals 52 may be embodied as a number of assisted checkout terminals (i.e. retail checkout terminals which are operated by a checkout clerk employed by the retailer) located within the checkout area 15 of the retailer's store.

The supervisor terminal 54 is preferably embodied as a security/assistance terminal located in either a central area within the retailer's store, or may alternatively be located in a location which is remote from the retailer's store and hence the retail checkout terminals 52. What is meant herein by the phrase "a location which is remote from the retail terminal" is a location which is not physically located within the building or structure in which the retail checkout terminals 52 are located. For example, the remote location may include a retailer's regional office which provides services to each of the retailer's stores located within a certain geographic area. Moreover, the remote location may include a retailer's national headquarters which provides services to each of the retailer's stores located nationwide.

The retail checkout terminals 52 are networked or otherwise electrically coupled to the supervisor terminal 54 via a network 56. The retail system 50 also includes a network server 58 for routing communication data (e.g. audio and video streams) within the network 56 (i.e. between the components associated with the system 50). Moreover, the network server 58 has a mass storage device 60 associated therewith which maintains a number of databases associated with operation of the retail system 50. For example, the mass storage device 60 maintains a master product database 62 which includes product information associated with each item sold by the retailer. For instance, if a customer scans or otherwise enters an item for purchase into one of the retail checkout terminals 52 such as the self-service checkout terminal 10, the processing unit associated with the terminal 10 communicates with the network server 58 in order to retrieve product information, such as pricing information, associated with the item from the master product database 62. Such product information is then communicated to the self-service checkout terminal 10 for purposes of completing the retail transaction such as calculating the total of the customer's items for purchase and printing a receipt.

For purposes of the following discussion, the self-service checkout terminal 10 will be described in detail; however, it should be appreciated that an assisted checkout terminal may be configured in a similar manner. In particular, as shown in FIGS. 1 and 2, each of the self-service checkout terminals 10 includes a status light device 11, a product scale 12, a scanner 14, a video conferencing device 16 having a display monitor 32 associated therewith, a card reader 30, a keypad 34, a printer 36, and a processing unit 26. The video conferencing device 16, the card reader 30, the keypad 34, and the printer 36 may be provided as separate components, or alternatively may preferably be provided as components of an automated teller machine (ATM) 24. Each of the self-service checkout terminals 10 communicates with the network server 58 via a network connection 72.

The scanner 14 conventionally scans or reads a product identification code such as a Universal Product Code (UPC), industrial symbol(s), alphanumeric character(s), or other indicia associated with an item to be purchased. One scanner which may be used in the present invention is a model number 7875 bi-optic scanner which is commercially available from NCR Corporation of Dayton, Ohio.

The scanner 14 includes a first scanning window 14a and a second scanning window 14b. The first scanning window 14a is disposed in a substantially horizontal manner, whereas the second scanning window 14b is disposed in a substantially vertical manner, as shown in FIG. 1. The product scale 12 is integrated with the scanner 14. More specifically, the product scale 12 is disposed substantially parallel to the scanning window 14a thereby enveloping the scanning window 14a. If an item such as produce is placed upon the product scale 12 or the first scanning window 14a, the product scale 12 may be used to determine the weight of the item.

The scanner 14 also includes a light source (not shown) such as a laser, a rotating mirror (not shown) driven by a motor (not shown), and a mirror array (not shown). In operation, a laser beam reflects off the rotating mirror and mirror array to produce a pattern of scanning light beams. As the product identification code on an item is passed over the scanner 14, the scanning light beams scatter off the code and are returned to the scanner 14 where they are collected and detected. The reflected light is then analyzed electronically in order to determine whether the reflected light contains a valid product identification code pattern. If a valid code pattern is present, the product identification code is then converted into pricing information which is then used to determine the cost of the item in a known manner.

The display monitor 32 displays instructions which serve to guide a customer through a checkout procedure. For example, an instruction is displayed on the display monitor 32 which instructs the customer to enter an item into the self-service checkout terminal 10 by either passing the item over the scanner 14, or placing the item on the product scale 12 in order to obtain the weight of the item. The display monitor 32 is preferably a known touch screen monitor which can generate data signals when certain areas of the screen are touched by a customer.

The status light device 11 is provided in order to communicate status of the self-service checkout terminal 10 to store personnel, such as a customer service manager. In particular, the status light device 11 may display a first colored light in order to notify store personnel that the self-service checkout terminal 10 is idle or otherwise not in use. Alternatively, the status light device 11 may display a second colored light in order to notify store personnel that the self-service checkout terminal 10 is being operated by a customer.

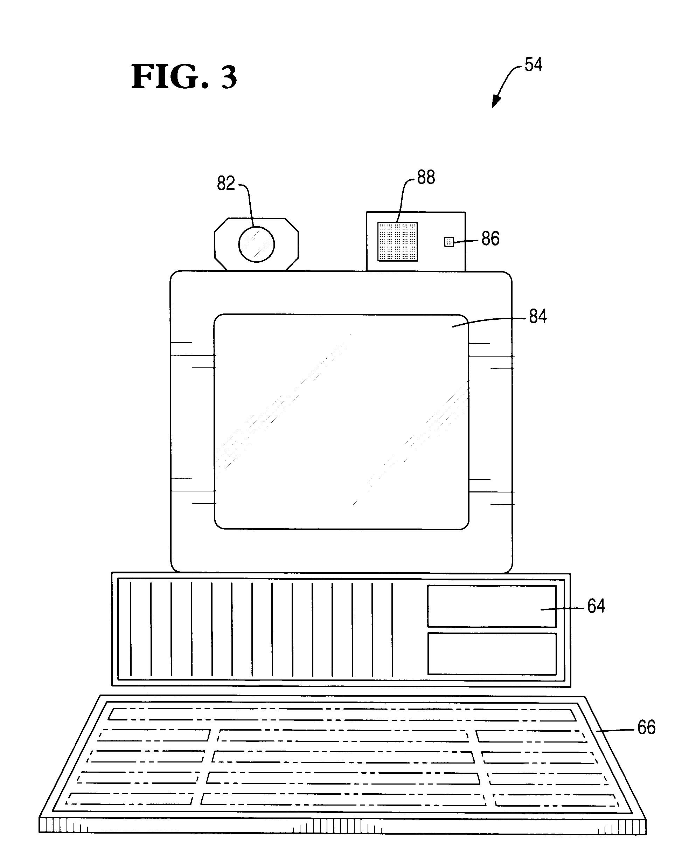

As shown in FIGS. 1 and 3, the supervisor terminal 54 includes a processing unit 64, a keyboard 66, and a video conferencing device 68. The supervisor terminal 54 communicates with the network server 54 via a network connection 74.

The video conferencing device 16 of the self-service checkout terminal 10 and the video conferencing device 68 of the supervisor terminal 54 are provided to allow a customer that is operating the self-service checkout terminal 10 to participate in a video conference with retail personnel, such as a customer service manager, located at the supervisor terminal 54. Although the individual herein described as the operator of the supervisor terminal 54 is a customer service manager, it should be appreciated that the supervisor terminal 54 may be operated by any type of retail personnel that is designated by the retailer. The video conferencing device 16 includes a video camera 76, the display monitor 32, a microphone 78, and a speaker 80. Similarly, the video conferencing device 68 includes a video camera 82, a display monitor 84, a microphone 86, and a speaker 88. It should be appreciated that the video conferencing devices 16, 68 also include the hardware and software (not shown) necessary to conduct a video conference therebetween. It should be further appreciated that any one of a number of known video conferencing devices may be used as the video conferencing devices 16, 68 of the present invention. One such video conferencing device which is particularly useful as the video conferencing devices 16, 68 of the present invention is disclosed in U.S. Patent Number 5,604,341 issued to Grossi et al., which is hereby incorporated by reference, and which is assigned to the same assignee as the present invention.

In such a configuration, the video conferencing devices 16, 68 are utilized to communicate information from the customer service manager located at the supervisor terminal 54 to the customer located at the self-service checkout terminal 10. In particular, the video camera 82 collects or otherwise captures video images of the customer service manager operating the supervisor terminal 54. Thereafter, a processing unit (not shown) associated with the video conferencing device 68 generates a video stream corresponding to the captured video images. Such a video stream is then transmitted from the video conferencing device 68 via the network 56 so as to be received by the video conferencing device 16. Thereafter, video images of the customer service manager are extracted from the received video stream. The extracted video images of the customer service manager located at the supervisor terminal 54 are then displayed on the display monitor 32 for presentation to the customer operating the self-service checkout terminal 10. It should be appreciated that corresponding audio sounds in the form of an audio message from the customer service manager (e.g. a voice instruction) are detected or otherwise captured by the microphone 86 simultaneously with capture of the video images of the customer service manager. The processing unit associated with the video conferencing device 68 then generates an audio stream corresponding to the captured audio message. Such an audio stream is then transmitted from the video conferencing device 68 via the network 56 so as to be received by the video conferencing device 16 of the self-service checkout terminal 10. Thereafter, audio sounds corresponding to the audio message (e.g. the voice instruction) are extracted from the audio stream. The extracted sounds are generated for the customer via use of the speaker 80 simultaneously with display of the corresponding video images of the customer service manager on the display monitor 32.

Similarly, the video conferencing devices 16, 68 are utilized to communicate information, such as questions or concerns, from the customer located at the self-service checkout terminal 10 to the customer service manager located at the supervisor terminal 54. In particular, the video camera 76 collects or otherwise captures video images of the customer operating the self-service checkout terminal 10. Thereafter, a processing unit (not shown) associated with the video conferencing device 16 generates a video stream corresponding to the captured video images. Such a video stream is then transmitted from the video conferencing device 16 via the network 56 so as to be received by the video conferencing device 68. Thereafter, video images of the customer are extracted from the received video stream. The extracted video images of the customer located at the self-service checkout terminal 10 are then displayed on the display monitor 84 for presentation to the customer service manager operating the supervisor terminal 54. It should be appreciated that corresponding audio sounds in the form of an audio message from the customer (e.g. a question) are detected or otherwise captured by the microphone 78 simultaneously with capture of the video images of the customer. The processing unit associated with the video conferencing device 16 then generates an audio stream corresponding to the captured audio message. Such an audio stream is then transmitted from the video conferencing device 16 via the network 56 so as to be received by the video conferencing device 68 of the supervisor terminal 54. Thereafter, audio sounds corresponding to the audio message (e.g. the question) are extracted from the audio stream. The extracted sounds are generated for the customer service manager via use of the speaker 88 simultaneously with display of the corresponding video images of the customer on the display monitor 84.

Hence, as described, the video conferencing devices 16, 68 are configured to communicate with one another in order to allow the customer located at the self-service checkout terminal 10 to participate in a video conference with the operator (e.g. the customer service manager) located at the supervisor terminal 54. Such a configuration facilitates operation of the retail system 50. In particular, since the customer may have little or no training in the operation of the self-service checkout terminal 10, the customer may occasionally request assistance from store personnel during operation of the terminal 10. In such a situation, the customer may request assistance by touching a particular area of the touch screen of the display terminal 32 or may touch a particular key associated with the keypad 34. If the customer requests assistance in such a manner, the retail system 50 may be configured such that a video conference between the customer and the customer service manager located at the supervisor terminal 54 is initiated in order to assist the customer in further operation of the self-service checkout terminal 10. It should be appreciated that the customer's request for assistance may be responded to in a number of different manners. For example, the customer and the customer service manager may have an interactive audio/video discussion in order to resolve the customer's concern. In addition, the customer service manager may also type or otherwise input a text message into the keyboard 66 that addresses the customer's question or concern. Text data associated with such a text message is transmitted via the network 56 in order to be displayed on the display monitor 32 associated with the video conferencing device 16 for presentation to the customer. Moreover, if the customer requests product information associated with an item (e.g. identity, product lookup code, price, etc.), the customer service manager may opt to enter such information into the self-service checkout terminal 10 directly from the keyboard 66 associated with the supervisor terminal 54.

In addition, the retail system 50 may be configured such that if the customer enters restricted items, such as tobacco products or alcoholic beverages, which by law or otherwise require verification of the customer's age, a video conference between the customer and the customer service manager is initiated. During such a video conference, the customer service manager may require the customer to hold his or her identification card (e.g. driver's license) in front of the video camera 76 such that the customer service manager can verify the customer's age.

Moreover, if the customer attempts to void an item from his or her transaction, a video conference between the customer and the customer service manager is initiated. During such a video conference, the customer service manager instructs the customer on the procedure associated with voiding the item, along with verifying that the customer actually voids the item from his or her transaction.

Yet further, the video conferencing devices 16, 68 may be utilized to enhance security associated with operation of the self-service checkout terminal 10. In particular, if the self-service checkout terminal 10 detects a number of security violations which exceeds a predetermined threshold, a video conference may be initiated between the customer service manager and the customer. During such a video conference, the customer service manager may audit or otherwise investigate the customer's transaction in order to determine if the customer is intentionally trying to commit an impropriety such as theft. Moreover, if such security violations are inadvertent, the customer service manager may provide assistance to the customer in an effort to reduce the number of security violations committed by the customer during subsequent use of the terminal 10.

The video conferencing devices 16, 68 may also be utilized to facilitate operation of an assisted checkout terminal by a checkout clerk. In particular, if the checkout clerk operating the terminal does not recognize one of the customer's items for purchase, such as exotic produce, the clerk may initiate a video conference with the customer service manager. During such a video conference, the checkout clerk positions the item (e.g. the exotic produce item) in front of the video camera 76 such that the customer service manager may in turn transmit product data in order to assist the clerk in identifying the item. It should be appreciated that in the case in which the checkout terminal 52 is embodied as an assisted checkout terminal, the configuration of the video conferencing device 16 may be altered. In particular, since a majority of the checkout clerk's information requests are generally product-related information requests, the video camera 76 may be positioned in order to detect or otherwise capture video images associated with the product as opposed to images associated with the checkout clerk. For example, the video camera 76 may be secured to the housing of the scanner 14 such that the video camera 76 captures images associated with items being positioned on the scanning window 14a or the product scale 12. Hence, if the checkout clerk needs assistance in regard to identity of an exotic produce item, the clerk may position the produce item on the product scale 12, and thereafter initiate a video conference with the customer service manager. In such a situation, video images of the exotic produce item are displayed on the display monitor 84 of the supervisor terminal 54 such that the customer service manager may assist the checkout clerk in identifying the exotic produce item.

Moreover, the checkout clerk may need assistance in the case in which a bar code label is missing or damaged thereby preventing the item from being scanned. In such a situation, the clerk may position the item with the missing or damaged bar code label on the scanning window 14a and/or the product scale 12, and thereafter initiate a video conference with the customer service manager. Video images of the item are then displayed on the display monitor 84 of the supervisor terminal 54 such that the customer service manager may assist the checkout clerk in identifying the item and retrieving product information (e.g. description and price) for the item.

Yet further, if the customer being assisted by the checkout clerk has a question or concern relating to an item that the checkout clerk cannot answer (e.g. the shelf life or cooking time associated with the item), the clerk may position the item on the scanning window 14a and/or the product scale 12, and thereafter initiate a video conference with the customer service manager. In such a situation, video images of the item are displayed on the display monitor 84 of the supervisor terminal 54 such that the customer service manager may assist the checkout clerk in answering the customer's question.

It should be appreciated that in each of the above-noted examples, the checkout clerk may participate in a video conference with the customer service manager while concurrently continuing to scan or otherwise enter the customer's items for purchase into the assisted checkout terminal. Such concurrent operation enhances the throughput or efficiency associated with operation of the assisted checkout terminal.

In operation, once the customer has selected all of his or items for purchase from the shopping area of the retailer's store, the customer will proceed to the checkout area 15 of the retailer's store in order to checkout his or her items for purchase and tender payment for the same. In the checkout area 15, the customer may opt to either checkout his or her items for purchase via use of either the self-service checkout terminal 10 or an assisted checkout terminal being operated by a checkout clerk employed by the retailer. For purposes of the following discussion, operation of the self-service checkout terminal 10 will be described; however, it should be appreciated that an assisted checkout terminal may be operated in a similar manner.

When the customer arrives at the self-service checkout terminal 10, the terminal 10 is in an idle state. An initialization procedure is executed prior to checking out items for purchase. In particular, one or more initialization instructions are displayed on the display monitor 32 which instruct the customer to (1 ) touch a particular area of the display monitor 32 or push a particular button on the keypad 34 in order to select a desired method of payment, and/or (2) identify himself or herself by inserting a loyalty card, debit card, credit card, or smart card into the card reader 30.

At the completion of the initialization procedure, the customer enters individual items for purchase by scanning the items across the scanner 14. Moreover, the customer may enter items, such as produce items or the like, by weighing the items with the product scale 12, and thereafter entering a product lookup code associated with the item via either the keypad 34 or by touching a particular area of the display monitor 32. Further, the customer may also enter an item by manually entering the product identification code associated with the item via use of the keypad 34. Such manual entry of an item may be necessary for items which would otherwise be entered via the scanner 14 if the bar code printed on the item is not readable by the scanner 14. Once an item is scanned or otherwise entered into the self-service checkout terminal, an item-entered control signal is generated. Generation of the item-entered control signal causes an item-entered message to be displayed on the display monitor 32 of the video conferencing device 16 thereby providing visual feedback to the customer that the item has been properly entered.

Moreover, generation of the item-entered control signal causes a record associated with the item to be entered into a transaction table which includes a record of the product information associated with each item that is scanned, weighed, or otherwise entered during the customer's use of the self-service checkout terminal 10. For example, if the customer scans a can of soup, the description of the soup and the pricing information associated therewith is recorded in the transaction table. Similarly, if the customer weighs a watermelon with the product scale 12 and then enters a product lookup code associated with watermelon via the keypad 34, product information associated with the watermelon is recorded in the transaction table. It should therefore be appreciated that the sum of each of the items recorded in the transaction table (1) minus any reductions (e.g. coupons), and (2) plus any applicable taxes is the amount that the customer pays for his or her transaction. Moreover, data stored in the transaction table is printed out on the printer 36 (see FIG. 1 ) thereby generating a receipt for the customer at the end of his or her transaction.

Once the customer has entered all of his or her items for purchase, a finalization procedure is performed in which (1 ) a grocery receipt is printed by the printer 36, and (2) payment is tendered by either inserting currency into a cash acceptor (not shown), charging a credit card or debit card account, or decreasing a value amount stored on a smart card via the card reader 30. It should be appreciated that in the case of when a customer inserts currency into the cash acceptor, the self-service checkout terminal 10 may provide change via a currency dispenser (not shown) and a coin dispenser (not shown). After completion of the finalization procedure, the self-service checkout terminal 10 is placed in an idle condition until a subsequent customer initiates a checkout procedure.

It should be appreciated that during the above-described procedure, the customer may receive assistance in operation of the self-service checkout terminal. In particular, the customer may request assistance from store personnel by touching a particular area of the touch screen of the display terminal 32 or may touch a particular key associated with the keypad 34. If the customer requests assistance in such a manner, a video conference between the customer and the customer service manager located at the supervisor terminal 54 is initiated so as to assist the customer in operation of the self-service checkout terminal 10. As described above, instruction data may be transmitted to the customer in a number of different manners. For example, the customer and the customer service manager may have an interactive audio/video discussion in order to assist the customer. In addition, the customer service manager may also type or otherwise input a text message into the keyboard 66 associated with the supervisor terminal 54 which is then displayed on the display monitor 32 associated with the self-service checkout terminal 10 in order to assist the customer. Moreover, if the customer requests product information associated with an item (e.g. identity, product lookup code, price, etc.), the customer service manager may opt to enter such information into the self-service checkout terminal 10 directly from the keyboard 66 associated with the supervisor terminal 54.

Moreover, if during entry of his or her items for purchase the customer enters restricted items, such as tobacco products or alcoholic beverages, which by law or otherwise require verification of the customer's age, a video conference between the customer and the customer service manager is initiated. During such a video conference, the customer service manager may require the customer to hold his or her identification card (e.g. driver's license) in front of the video camera 76 such that the customer service manager can verify the customer's age.

Moreover, if the customer attempts to void an item from his or her transaction, a video conference between the customer and the customer service manager is initiated. During such a video conference, the customer service manager instructs the customer on the procedure associated with voiding the item, along with verifying that the customer actually voids the item from his or her transaction.

Yet further, if during the customer's transaction, the self-service checkout terminal 10 detects a number of security violations which exceeds a predetermined threshold, a video conference may be initiated between the customer service manager and the customer. During such a video conference, the customer service manager may audit or otherwise investigate the customer's transaction in order to determine if the customer is intentionally trying to commit an impropriety such as theft. Moreover, if such security violations are inadvertent, the customer service manager may provide assistance to the customer in an effort to reduce the number of security violations committed by the customer during subsequent use of the terminal 10.

Hence, as described above, the retail system 50 of the present invention provides numerous advantageous over retail systems which have heretofore been designed. For example, the retail system 50 of the present invention reduces the number of occasions in which an employee (e.g. the customer service manager) of the retailer must approach a retail checkout terminal (e.g. the self-service checkout terminal 10) in order to intervene in a checkout transaction relative to retail systems which have heretofore been designed. Moreover, the retail system 50 of the present invention allows a user (e.g. a customer or a checkout clerk) located at a retail checkout terminal to participate in a video conference with retail personnel, such as a customer service manager, located at a supervisor terminal thereby allowing a single customer service manger to concurrently service or otherwise attend to a plurality of retail checkout terminals. In the case of when the supervisor terminal is located at a location which is remote from the retail checkout terminals 52, a single customer service manger may concurrently service or otherwise attend to retail checkout terminals 52 located in a plurality of retail stores.

While the invention has been illustrated and described in detail in the drawings and foregoing description, such an illustration and description is to be considered as exemplary and not restrictive in character, it being understood that only the preferred embodiment has been shown and described and that all changes and modifications that come within the spirit of the invention are desired to be protected.

Although the retail system 50 is herein described as providing for video conferencing between the retail terminals 52 and the supervisor terminal 54, and has significant advantages thereby in the present invention, it should be appreciated that certain of such advantages may be achieved by providing video conferencing between different types of terminals. For example, the video conferencing device 16 of the retail terminals 52 may be configured to communicate with numerous other types of terminals other than the supervisor terminal 54 thereby allowing the user of one of the retail terminals 52 to communicate with the operator of the other terminal. For example, the video conferencing device 16 of the retail terminals 52 may be configured to communicated with video conferencing devices included in other retail terminals, automated teller machines (ATMs), or personal computers (PCs).

## Claims

1. A retail system, characterized by:
a retail terminal for use by a user, said retail terminal having (i) a scanner for scanning an item for purchase, and (ii) a first video conferencing device; and
a supervisor terminal for use by retail personnel, said supervisor terminal having a second video conferencing device,
wherein said first video conferencing device and said second video conferencing device are configured to communicate with one another so as to allow said user located at said retail terminal to participate in a video conference with said retail personnel located at said supervisor terminal.

2. The retail system of claim 1, wherein:
said first video conferencing device includes (i) a first display monitor, and (ii) a first video camera,
said second video conferencing device includes (i) a second display monitor, and (ii) a second video camera,
said second video conferencing device is further configured to (i) capture first video images of said retail personnel with said second video camera, (ii) generate a first video stream corresponding with said first video images, and (iii) transmit said first video stream, and
said first video conferencing device is further configured to (i) receive said first video stream, (ii) extract second video images from said first video stream, said second video images being representative of said first video images, and (iii) display said second video images with said first display monitor.

3. The retail system of claim 2, wherein:
said first video conferencing device is further configured to (i) capture third video images of said user with said first video camera, (ii) generate a second video stream corresponding with said third video images, and (iii) transmit said second video stream, and
said second video conferencing device is further configured to (i) receive said second video stream, (ii) extract fourth video images from said second video stream, said fourth video images being representative of said third video images, and (iii) display said fourth video images with said second display monitor.

4. The retail system of claim 3, wherein:
both said first and said second video streams have audio streams associated therewith.

5. The retail system of claim 2, wherein:
said supervisor terminal has a data input device which is configured to receive inputted text data associated with a text message from said retail personnel,
said supervisor terminal is configured to transmit said inputted text data associated with said text message, and
said retail terminal is configured to (i) receive said inputted text data, and (ii) display said text message with said first display monitor.

6. The retail system of claim 1, wherein said supervisor terminal is located in a location which is remote from said retail terminal.

7. The retail system of claim 1, wherein:
said retail terminal includes a self-service checkout terminal which is operated by a retail customer, and
said first video conferencing device and said second video conferencing device are further configured to communicate with one another so as to allow said retail personnel located at said supervisor terminal to transmit instruction data associat
ed with operation of said self-service checkout terminal to said retail customer.

8. The retail system of claim 1, wherein:
said retail terminal includes an assisted checkout terminal which is operated by a checkout clerk, and
said first video conferencing device and said second video conferencing device are further configured to communicate with one another so as to allow said retail personnel located at said supervisor terminal to transmit product data to said checkout clerk.

9. A method of operating a retail system which includes (i) a retail terminal for use by a user, said retail terminal having (a) a scanner for scanning an item for purchase, and (b) a first video conferencing device, and (ii) a supervisor terminal for use by retail personnel, said supervisor terminal having a second video conferencing device, characterized by the steps of:
capturing first video images with said second video conferencing device;
generating a first video stream corresponding with said first video images;
transmitting said first video stream with said second video conferencing device;
receiving said first video stream with said first video conferencing device;
extracting second video images from said first video stream, said second video images being representative of said first video images;
displaying said second video images with said first video conferencing device;
generating an item-entered control signal when said user scans said item for purchase with said scanner; and
displaying an item-entered message with said first video conference device in response to generation of said item-entered control signal.

10. The method of claim 9, further comprising the steps of:
capturing third video images with said first video conferencing device;
generating a second video stream corresponding with said third video images;
transmitting said second video stream with said first video conferencing device;
receiving said second video stream with said second video conferencing device;
extracting fourth video images from said second video stream, said fourth video images being representative of said third video images; and
displaying said fourth video images with said second video conferencing device.

11. The method of claim 10, wherein:
said first video conferencing device includes (i) a first display monitor, and (ii) a first video camera,
said second video conferencing device includes (i) a second display monitor, and (ii) a second video camera,
said step of capturing said first video images includes the step of capturing said first video images with said second video camera, and
said step of displaying said second video images includes the step of displaying said second video images with said first display monitor.

12. The method of claim 11, wherein:
said step of capturing said third video images includes the step of capturing said third video images with said first video camera, and
said step of displaying said fourth video images includes the step of displaying said fourth video images with said second display monitor.

13. The method of claim 12, further comprising the steps of:
capturing first audio sounds with said second video conferencing device;
generating a first audio stream corresponding with said first audio sounds;
transmitting said first audio stream with said second video conferencing device;
receiving said first audio stream with said first video conferencing device;
extracting second audio sounds from said first audio stream, said second audio sounds being representative of said first audio sounds; and
generating said second audio sounds with said first video conferencing device,
wherein (i) both said step of capturing said first audio sounds and said step of capturing said first video images are performed during a first time period, and (ii) both said step of generating said second audio sounds and said step of displaying said second video images are performed during a second time period.

14. The method of claim 13, further comprising the steps of:
capturing third audio sounds with said first video conferencing device;
generating a second audio stream corresponding with said third audio sounds;
transmitting said second audio stream with said first video conferencing device;
receiving said second audio stream with said second video conferencing device;
extracting fourth audio sounds from said second audio stream, said fourth audio sounds being representative of said third audio sounds; and
generating said fourth audio sounds with said second video conferencing device,
wherein (i) both said step of capturing said third audio sounds and said step of capturing said third video images are performed during a third time period, and (ii) both said step of generating said fourth audio sounds and said step of displaying said fourth video images are performed during a fourth time period.

15. The method of claim 10, further comprising the steps of:
receiving inputted text data associated with a text message from said retail personnel;
transmitting said inputted text data with said second video conferencing device;
receiving said inputted text data with said first video conferencing device; and
displaying said text message with said first video conferencing device.

16. The method of claim 10, wherein said step of capturing said first video images includes the step of capturing said first video images with said second video conferencing device from a location which is remote from said retail terminal.

17. A retail terminal for use by a user, comprising:
a scanner for scanning an item for purchase; and
a first video conferencing device, wherein said first video conferencing device is configured so as to allow said user located at said retail terminal to participate in a video conference with an operator of a second video conferencing device.
